# EUROPÄISCHE PATENTANMELDUNG

(11) **EP 4 629 504 A1**
(43) Veröffentlichungstag der Anmeldung: **08.10.2025**
(21) Anmeldenummer: 24168449.7
(22) Anmeldetag: 04.04.2024
(51) Int. Cl.: H02S 20/30, F24S 30/00

(54) **PHOTOVOLTAIKANLAGE SOWIE VERFAHREN ZUR ERZEUGUNG VON SOLARENERGIE DURCH EINE PHOTOVOLTAIKANLAGE**

(71) Anmelder: Bartholet Maschinenbau AG, 8890 Flums (CH)
(72) Erfinder: Thuli, Martin, 7324 Vilters (CH); Stampfl, Raphael, 6900 Bregenz (AT); Becker, Peter, 8856 Tuggen (CH); Menzi, Markus, 8758 Obstalden (CH)
(74) Vertreter: Hepp Wenger Ryffel AG

(57) **Zusammenfassung**

Eine Photovoltaikanlage (1), insbesondere zum Einsatz im alpinen Gebiet, umfasst ein erstes äusseres Tragseil (2) und ein zweites äusseres Tragseil (2), wobei die Tragseile (2) von einer ersten Stützvorrichtung (3) zu einer zweiten Stützvorrichtung (3) verlaufen, sowie zumindest ein Solarmodul (4), welches zwischen zwei Tragseilen (2) angeordnet ist. Die Photovoltaikanlage umfasst zumindest eine Solaroberfläche (5), sowie ein Verstellseil (6), durch das die Solaroberfläche (5) relativ zu den Tragseilen (2) um eine Verstellachse (7) winkelverstellbar ist, wobei das Verstellseil (6) über einen Hebel (8) mit dem Solarmodul (4) verbunden ist. Die Verstellachse (7), um die das Solarmodul (4) gedreht wird, verläuft senkrecht zu den Tragseilen (2) Das Solarmodul (4) umfasst eine Stabilisierungsvorrichtung (9), welche das Solarmodul (4) insbesondere gegen Biegung und/oder Torsion stabilisiert.

## Beschreibung

Die Erfindung richtet sich auf eine Photovoltaikanlage und ein Verfahren zur Erzeugung von Solarenergie mit einer derartigen Photovoltaikanlage.

Photovoltaikanlagen an sich sind weitläufig bekannt. Üblicherweise werden diese auf Dachflächen zur Erzeugung von Solarenergie insbesondere für das darunter liegenden Gebäude verwendet. Es ist ebenfalls eine Einspeisung der erzeugten Energie ins Netz möglich. Weiterhin sind auch Photovoltaikanlagen bekannt, die jeweils am Boden befestigt werden und so wertvolle Agrarflächen verbrauchen. Aus der WO 2010/006460 ist eine Solaranlage mit mehreren Solarmodulen bekannt, die auf parallel verlaufenden Drahtseilen montiert sind. Die Reinigung und Demontage dieser Solarmodule ist extrem aufwendig. Weiterhin ist aus der WO 2015/169396 eine Solaranlage bekannt, deren Solarmodule in zwei Richtungen, die jeweils senkrecht zueinanderstehen, verstellbar sind. Diese Anlage ist sehr störungsanfällig.

Es ist daher die Aufgabe der Erfindung die Nachteile des Standes der Technik zu vermeiden und eine Photovoltaikanlage und ein Verfahren zur Erzeugung von Solarenergie mit einer derartigen Photovoltaikanlage zu schaffen, die wenig Landschaftsoberfläche verbraucht und gleichzeitig leicht zu warten ist.

Die Aufgabe wird durch eine Photovoltaikanlage sowie ein Verfahren zur Erzeugung von Solarenergie mit einer Photovoltaikanlage gemäss den unabhängigen Ansprüchen gelöst.

Insbesondere wird die Aufgabe durch eine Photovoltaikanlage, insbesondere zum Einsatz im alpinen Gebiet, gelöst, die ein erstes äusseres Tragseil und ein zweites äusseres Tragseil umfasst. Die Tragseile verlaufen von einer ersten Stützvorrichtung zu einer zweiten Stützvorrichtung. Die Photovoltaikanlage umfasst weiterhin zumindest ein Solarmodul, welches zwischen den zwei Tragseilen angeordnet ist und zumindest eine Solaroberfläche umfasst. Die Photovoltaikanlage umfasst weiterhin ein Verstellseil, durch das die Solaroberfläche relativ zu den Tragseilen um eine Verstellachse winkelverstellbar ist, wobei das Verstellseil über einen Hebel mit dem Solarmodul verbunden ist. Die Verstellachse, um die das Solarmodul gedreht wird, verläuft senkrecht zu den Tragseilen. Das Solarmodul umfasst eine Stabilisierungsvorrichtung, welche das Solarmodul insbesondere gegen Biegung und/oder Torsion stabilisiert.

Eine derartige Photovoltaikanlage kann auch in Gebieten montiert werden, in denen höhere Windgeschwindigkeiten herrschen.

Die Photovoltaikanlage kann weiterhin mittlere Stützvorrichtungen umfassen, über die die Tragseile ebenfalls verlaufen. Somit kann eine grössere Längenausdehnung der Photovoltaikanlage erzielt werden. Die Längenausdehnung der Photovoltaikanlage kann im Wesentlichen 130 - 170 m betragen, bevorzug im Wesentlichen 150 m. Dies erlaubt ein optimales Kosten-Nutzen-Verhältnis.

Die Stützvorrichtungen der Photovoltaikanlage können im Wesentlichen 43 m bis 47 m Entfernung voneinander aufweisen. Die Tragseile können einen Abstand von im Wesentlichen 10 m bis 12 m aufweisen. Die Höhe der Tragseile oberhalb des Bodens und damit die Länge der Stützvorrichtung liegt insbesondere im Bereich von 5 bis 7 m.

Das Solarmodul kann eine obere und eine untere Solaroberfläche umfassen. Dies kann auch der Fall sein, sofern keine Stabilisierungsvorrichtung ausgebildet ist.

Somit kann die obere Fläche das direkte Licht der Sonne in Energie umwandeln und die untere Solaroberfläche das von der Bodenoberfläche reflektierte Licht in Energie umwandeln. Dies ist insbesondere in Bereichen einer hohen Reflektivität der Bodenoberfläche wie beispielsweise einer Schneeoberfläche sinnvoll. Somit lässt sich die Effizienz der Anlage signifikant erhöhen.

Es können mehrere Solarmodule nebeneinander angeordnet sein, wobei die Verstellachsen parallel zueinander angeordnet sind. Die Solarmodule sind jeweils zwischen den gleichen Tragseilen angeordnet, wobei insbesondere das Verstellseil mit allen Hebeln der parallel angeordneten Solarmodule verbunden ist.

Somit lassen sich alle parallel angeordneten Solarmodule gleichzeitig verstellen und ihre Position optimal zur Sonne ausrichten. Weiterhin lassen sich die Solarmodule so leicht von Schnee befreien, indem die Solarmoduloberflächen im Wesentlichen senkrecht zu den Tragseilen ausgerichtet werden und so Schnee von der Oberfläche abrutschen kann. Auch können die Solarmodule bei übermässigem Wind, der in alpinen Regionen häufig vorkommt, abhängig von der Windkraft so ausrichten, dass alle Bauteile der Photovoltaikanlage die Belastungen durch den Wind aushalten. Die Solarmodule können somit in einem Bereich von im Wesentlichen 0° bis 90° zu den Tragseilen verstellt werden.

Die Tragseile können in ihrer Höhe fixiert angeordnet sein und insbesondere relativ zu den Stützvorrichtungen in der Höhe unverstellbar sein. Es ist somit keine Verstellbarkeit der Tragseile in ihrer Höhe relativ zu den Stützvorrichtungen und zum Boden möglich. Somit ist in dieser Richtung auch keine Verstellung der Solaroberflächen möglich. Dies vereinfacht die Anlage und verbessert die Dauerhaftigkeit und die Wartungsabstände.

Es kann zumindest ein mittleres Tragseil ausgebildet sein, welches zwischen dem ersten und dem zweiten Tragseil angeordnet ist und an welchem erste Solarmodule befestigt sind, die mit dem ersten äusseren Tragseil verbunden sind und zweite Solarmodule die mit dem zweiten äusseren Tragseil verbunden sind.

Somit lässt sich die benötigte Menge Seile möglichst gering halten und die Anzahl der Solarmodule gleichzeitig maximieren.

Durch das Verstellseil können die ersten und die zweiten Solarmodule verstellbar sein.

Somit ist nur ein Verstellseil notwendig um die ersten du die zweiten Solarmodule gleichzeitig in ihrem Winkel zu verstellen.

Es können mindestens drei mittlere Tragseile ausgebildet sein, wobei weniger Verstellseile als mittlere Tragseile ausgebildet sind.

Somit lassen sich mit einem Verstellseil jeweils zwei Seiten von Solarmodulen verstellen und die Anzahl der Teile und damit auch der Wartungsaufwand lässt sich verringern.

Jedes Solarmodul kann ein mittleres Längsprofil umfassen, welches einen im Wesentlichen viereckigen Aussenquerschnitt aufweist. Der Innenquerschnitt weist mehr Ecken auf als der Aussenquerschnitt.

Ein derartiges Längsprofil ist leicht und gleichzeitig sehr stabil insbesondere gegen Biegung und Torsion, welche durch die Belastungen von Wind und Schnee und Eis auftreten. Das Längsprofil ist somit optimal an die lokalen Gegebenheiten angepasst.

Die Stabilisierungsvorrichtung kann auf der Unterseite des Solarmoduls angeordnet sein und lichtdurchlässige Öffnungen umfassen.

Die Stabilisierungsvorrichtung kann ein Rahmen um das gesamte Solarmodul sein oder alternativ ein oder mehrere Querträger, die das Solarmodul stützen. Um die untere Solaroberfläche jedoch weiterhin optimal mit Licht zu beaufschlagen weist die Stabilisierungsvorrichtung bevorzugt lichtdurchlässige Öffnungen auf. Somit lässt sich ein optimales Verhältnis von stabilem Solarmodul und gleichzeitig Lichtausbeute erreichen.

An mindestens einem der Tragseile kann eine Kraftmessvorrichtung ausgebildet sein, durch die effektive Windkräfte auf die Photovoltaikanlage messbar sind.

Die Kraftmessvorrichtungen können zwischen Tragseil und Bodenbefestigungsvorrichtung angeordnet sein und es kann je eine Kraftmessvorrichtung pro Tragseil ausgebildet sein. Somit lassen sich die Kräfte optimal messen und jegliche Überlastungsgefahr vermeiden.

Weiterhin sind durch die Kraftmessvorrichtungen die Winkelverstellungen der Solarmodule gesteuert, sodass die Solarmodule relativ zum Wind verstellt werden je nachdem wie hoch die Kraft in der Kraftmessvorrichtung am Tragseil ist. Analog kann auch die Verstellung basierend auf Schneelast auf den Solarmodulen basierend auf den Messwerten in den Kraftmessvorrichtungen durchgeführt werden. Insbesondere umfasst die Photovoltaikanlage hierzu eine Steuerungsvorrichtung, die Messwerte der Kraftmessvorrichtungen aufnimmt, verarbeitet und dann die Einstellung der Verstellseile anpasst.

Die Stützvorrichtungen können jeweils einen Seilsattel umfassen, in dem das jeweilige Tragseil eingeklemmt ist. Der Seilsattel ist bevorzugt beweglich mit der Stützvorrichtung verbunden.

Somit wirken auf die Stützvorrichtung ausschliesslich senkrechte Druckkräfte, was zu einer optimierten Festigkeit und Haltbarkeit der Anlage führt.

Zur Lösung der Aufgabe führt weiterhin ein Verfahren zur Erzeugung von Solarenergie durch eine Photovoltaikanlage wie vorhergehend beschrieben. Die Solarmodule sind beidseitig mit Solaroberflächen ausgestattet, so dass auch von der Geländeoberfläche reflektiertes Licht zur Energieerzeugung genutzt wird.

Mit einem derartigen Verfahren lässt sich die Effizienz einer Photovoltaikanlage insbesondere im alpinen Gebiet signifikant steigern.

Die Solarmodule werden bei Feststellung von zu viel Wind verstellt, sodass die Windangriffsfläche verkleinert wird.

Eine derartige Photovoltaikanlage kann auch im alpinen Gebiet angeordnet werden da sie höheren effektiven Winden standhalten kann.

Die Solarmodulen können bei Feststellung von zu viel Schnee und/oder Eis verstellt werden, sodass die Belastung im Wesentlichen entfernt wird.

Auch hier kann eine derartige Anlage in einem Bereich mit Schnee und Eis eingesetzt werden, ohne dass diese unter der Schneelast zerstört wird oder derartig stabil gebaut sein muss, dass sie sehr viel Untergrund in dem Bereich zerstört. Es lässt sich somit ein optimaler Kompromiss zwischen Energieerzeugung und Landschaftsschutz erzielen.

Nachfolgend wird die Erfindung in Ausführungsform anhand von Figuren näher erläutert. Hierbei zeigt:
- Figur 1:: Ein Solarmodul in einer Seitenansicht,
- Figur 2:: Eine Draufsicht auf das Solarmodul,
- Figur 3:: Einen Querschnitt durch ein Solarmodul an der Stelle A-A der Figur 1,
- Figur 4:: Ein Ausschnitt aus Figur 3 an der Stelle B,
- Figur 5:: Bereich C aus Figur 3,
- Figur 6:: Einen Querschnitt an der Position D-D aus Figur 1,
- Figur 7:: Einen Querschnitt durch das Längsprofil einer Photovoltaikanlage,
- Figur 8:: Einen Ausschnitt der Stützvorrichtungen für eine Photovoltaikanlage,

- Figur 9:: Eine Draufsicht auf einen Schnitt durch einen Seilsattel,
- Figur 10:: Eine perspektivische Ansicht einer Seilsattelhalbschale,
- Figur 11:: Einen Seilsattel auf einer Stützvorrichtung,
- Figur 12:: Eine Photovoltaikanlage mit zwei Tragseilen.

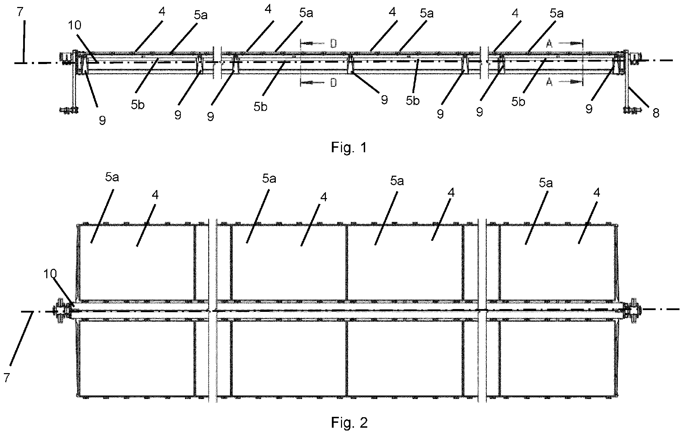

Figur 1 zeigt eine Seitenansicht eines Teiles einer Photovoltaikanlage. Dargestellt sind die Solarmodule 4, die jeweils eine obere Solaroberfläche 5a und eine untere Solaroberfläche 5b umfassen. Die Solarmodule 4 sind beidseitig des mittleren Längsprofils 10 angeordnet. Die Solarmodule 4 sind durch Stabilisierungsvorrichtungen 9 auf beiden Seiten stabilisiert, so dass sie grösseren Kräften durch Wind und/oder Schnee oder Eis Stand halten können. Gleichzeitig sind die Solarmodule 4 durch den Hebel 8 in ihrem Winkel verstellbar. Durch diese Winkelverstellbarkeit kann einerseits die Ausrichtung der Solarmodule 4 zur Sonne und andererseits die Verstellung der Solarmodule 4 bei zu grossen Windkräften oder bei einer Schnee- und Eislast angepasst werden.

Die Verstellachse 7 entspricht der Längsachse des mittleren Längsprofils 10. Bei Aktivierung des Hebels 8 durch das Verstellseil 6 (nicht dargestellt) rotieren die Solarmodule 4 um die Verstellachse 7. Die Photovoltaikanlage ist insgesamt im Wesentlichen 150 m lang.

Figur 2 zeigt eine Draufsicht auf die Solarmodule 3 aus Figur 1. Die Solarmodule 4 umfassen die oberen Solaroberflächen 5a beidseitig des mittleren Längsprofils 10. Das mittlere Längsprofil 10 erstreckt sich zwischen den beiden Tragseilen 2 (nicht dargestellt) auf einer Länge des Längsprofils 10 von circa 10 Meter.

Die Solarmodule 4 sind um die Verstellachse 7 in ihrem Winkel relativ zum Tragseil verstellbar.

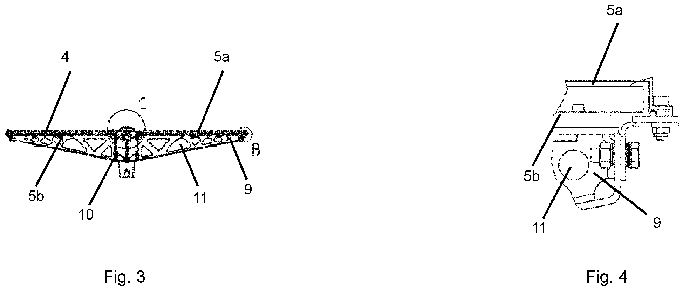

Figur 3 zeigt den Schnitt A-A aus Figur 1. Von dem Solarmodul 4 ist die obere Solaroberfläche 5a und die untere Solaroberfläche 5b ersichtlich. Das Solarmodul 4 ist beidseitig des mittleren Längsprofils 10 angeordnet. Unterhalb des Solarmoduls 4 ist eine Stabilisierungsvorrichtung 9 angeordnet, die lichtdurchlässige Öffnungen 11 umfasst. Die Anordnung der lichtdurchlässigen Öffnungen 11 ermöglicht einerseits sehr viel Licht auf der unteren Solaroberfläche 5b und gleichzeitig durch die Anordnung der Strukturen der Stabilisierungsvorrichtung 9 eine optimale Stabilisierung des Solarmoduls 4 gegen Kräfte durch Wind und/oder Schnee und Eis.

Figur 4 zeigt den Ausschnitt B aus Figur 3. Die obere Solaroberfläche 5a und die untere Solaroberfläche 5b sind durch eine Schraubvorrichtung mit der Stabilisierungsvorrichtung 9 verbunden. Die Stabilisierungsvorrichtung 9 umfasst Öffnungen 11.

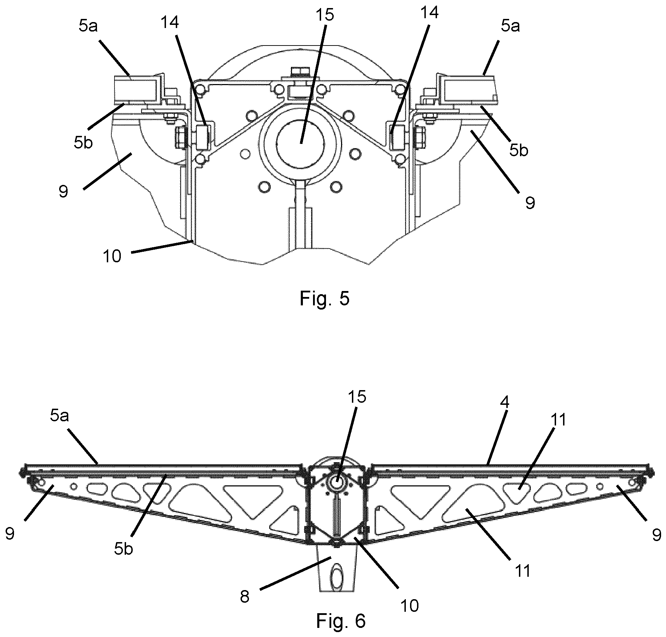

Figur 5 zeigt den Bereich C aus Figur 3 in einer Vergrösserung. Die obere Solaroberfläche 5a und die untere Solaroberfläche 5b des Solarmoduls 4 sind beidseitig des mittleren Längsprofils 10 angeordnet. Unterhalb des Solarmoduls 4 sind Stabilisierungsvorrichtungen 9 angeordnet. Das mittlere Längsprofil 10 weist Befestigungsvorrichtungen 14 auf, durch die die Stabilisierungsvorrichtungen 9 und die Solarmodule 4 mit dem mittleren Längsprofil 10 verbunden werden können. Das mittlere Längsprofil 10 weist im Inneren eine Drehachse 15 auf, um die das mittlere Längsprofil 10 drehbar ist. Durch diese Drehbarkeit lassen sich die Solarmodule 4 winkelverstellen.

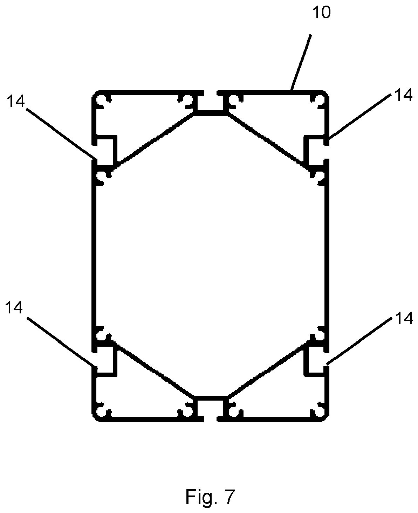

Figur 6 zeigt einen Schnitt durch den Schnitt D-D aus Figur 1. Es sind Solarmodule 4 ersichtlich mit der oberen Solaroberfläche 5a und der unteren Solaroberfläche 5b. Unterhalb der Solaroberfläche 5b sind Stabilisierungsvorrichtungen 9 mit lichtdurchlässigen Öffnungen 11 angeordnet. Durch den Hebel 8 sind die Solarmodule 4 winkelverstellbar, in dem das mittlere Längsprofil 10 um Drehachse 15 gedreht wird. Das mittlere Längsprofil 10 weist eine im Wesentlichen viereckige äussere Kontur auf sowie im Inneren eine im Wesentlichen achteckige Innenkontur. Durch diese Gestaltung ist das mittlere Längsprofil leicht und gleichzeitig stabil. Weiterhin umfasst das mittlere Längsprofil Befestigungsvorrichtungen (siehe Figur 5 und Figur 7), durch die Stabilisierungsvorrichtungen 9 und damit Solarmodule 4 an dem mittleren Längsprofil 10 befestigbar sind.

Figur 7 zeigt einen Querschnitt durch das mittlere Längsprofil 10. Das mittlere Längsprofil 10 weist Befestigungsvorrichtungen 14 an den Längsseiten auf, an denen Stabilisierungselemente 9 befestigbar sind. Das mittlere Längsprofil 10 weist eine im Wesentlichen viereckige Aussenkontur und eine im Wesentlichen achteckige Innenkontur auf. Somit ist der Kraftverlauf innerhalb des mittleren Längsprofils 10 optimiert und gleichzeitig das Gewicht soweit wie möglich reduziert. Das Längsprofil 10 wird bevorzugt aus Aluminium hergestellt.

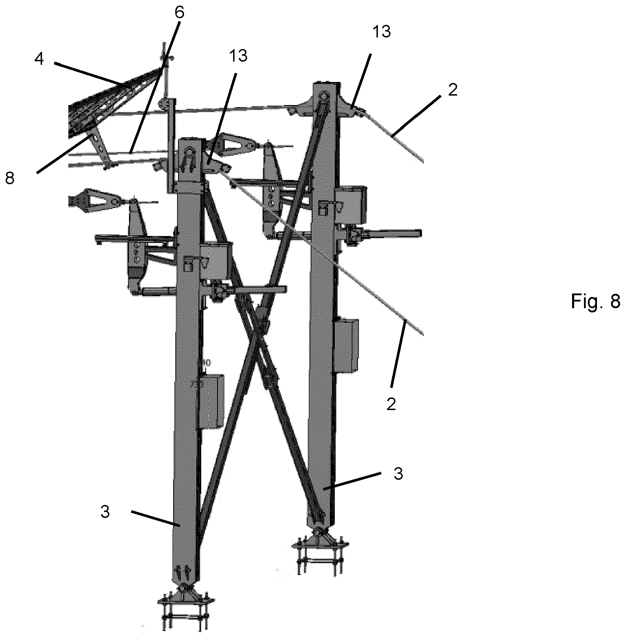

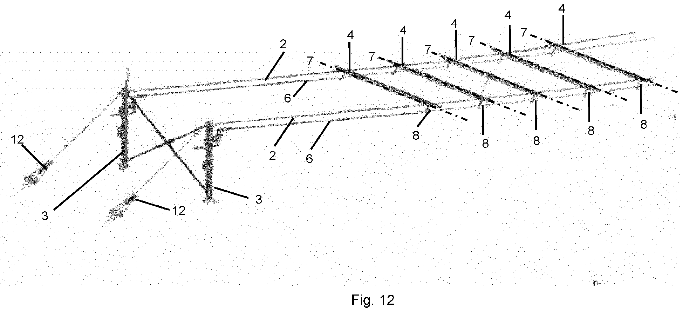

Figur 8 zeigt zwei Stützvorrichtungen 3 an einem Startpunkt der Photovoltaikanlage 1. Die Tragseile 2 verlaufen vom Boden, an dem sie ebenfalls befestigt sind, schräg hinauf in die Seilsättel 13, in denen sie entlang der Seillängsachse eingeklemmt sind. Die Seilsättel sind beweglich an der Stützvorrichtung gelagert, so dass Längenveränderungen der Seile ausgeglichen werden können. Die Seilsättel 13 ermöglichen daher eine Führung des Tragseils 2, wobei auf die Stützvorrichtungen 3 ausschliesslich senkrechte Kräfte entlang der Längsachse der Stützvorrichtung 3 wirken. Weiterhin sind auch die Stützvorrichtungen über ein Gelenk mit dem Boden verbunden (siehe auch Fig. 12), so dass auch hier, Veränderungen der Seillänge beispielsweise durch Temperaturänderungen aufgenommen werden können, ohne Querkräfte auf die Stützvorrichtungen 3 auszuüben. Dies optimiert den Kraftverlauf und stabilisiert die gesamte Photovoltaikanlage 1. Zusätzlich ist ein erstes Solarmodul 4 gezeigt, welches zwischen den Tragseilen 2 angeordnet ist. Das Solarmodul 4 umfasst einen Hebel 8, der mit einem Verstellseil 6 verbunden ist. Durch dieses Verstellseil lässt sich der Winkel des Solarmoduls je nach Bedürfnis verstellen.

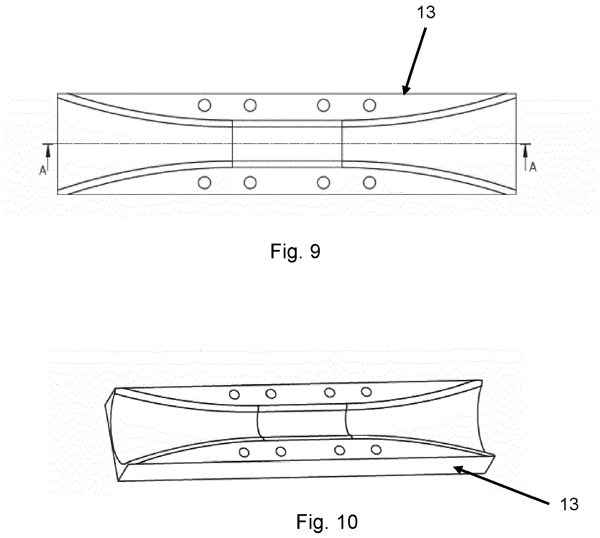

Figur 9 zeigt eine Draufsicht auf eine Halbschale eines Seilsattels 13. Entlang der Achse A verläuft das Tragseil 2 (nicht dargestellt), welches innerhalb des Seilsattels eingeklemmt ist. Der Seilsattel 13 umfasst jeweils zwei Halbschalen. Der Seilsattel 13 für die mittleren Stützvorrichtungen 3 ist dabei wie hier dargestellt im Wesentlichen gerade ausgerichtet, da das Tragseil 2 im Wesentlichen gerade über die mittleren Stützvorrichtungen 3 verläuft. Für die Stützvorrichtungen 3 am Ende der Photovoltaikanlage 1 weist der Seilsattel 13 entlang der Achse A eine Krümmung auf, da das Tragseil dort zum Boden geführt wird.

Figur 10 zeigt den Seilsattel 13 aus Figur 9 in einer perspektivischen Ansicht. Durch die Gestaltung der Seilführung mit einem grösseren Durchmesser aussen als in der Mitte können leichte Querverschiebungen des Tragseils 2 (nicht dargestellt) leichter aufgenommen werden und führen nicht zu Verschleiss des Seilsattels 13.

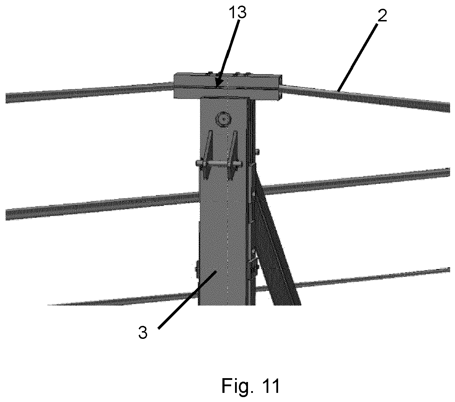

Figur 11 zeigt einen Seilsattel 13 aus den Figuren 9 und 10 auf einer Stützvorrichtung 3. Das Tragseil 2 verläuft durch den Seilsattel 13.

Figur 12 zeigt eine Photovoltaikanlage 1 mit den Tragseilen 2 auf den Stützvorrichtungen 3. Zwischen den Tragseilen 2 sind Solarmodule 4 angeordnet, die um eine Verstellachse 7 winkelverstellbar sind. Die Einstellung des Winkels erfolgt über Hebel 8 und Verstellseile 6. In dieser Darstellung sind zwei Verstellseile 6 dargestellt, wobei selbstverständlich auch nur ein Verstellseil 6 ausreicht. Die Tragseile 2 sind über Kraftmessvorrichtungen 12 mit dem Boden verbunden. Die Kraftmessvorrichtungen 12 nehmen die Zugkraft aus dem Tragseil 2 auf und sind derart ausgebildet, dass bei einem Überschreiten einer vordefinierten Maximalkraft ein Signal an eine Steuerungsvorrichtung für die Verstellseile 6 sendbar ist, und die Verstellseile 6 über die Hebel 8 die Winkelverstellung der Solarmodule 4 einleiten können. Somit kann bei zu grossen effektiven Windkräften die Kraft auf die Tragseile reduziert werden oder beispielsweise bei einer zu hohen Schnee- oder Eislast der Winkel der Solarmodule kurzfristig senkrecht eingestellt werden, so dass der Schnee automatisch von den Solarmodulen 4 herabfällt.

## Patentansprüche

1. Photovoltaikanlage (1), insbesondere zum Einsatz im alpinen Gebiet, umfassend ein erstes äusseres Tragseil (2) und ein zweites äusseres Tragseil (2), wobei die Tragseile (2) von einer ersten Stützvorrichtung (3) zu einer zweiten Stützvorrichtung (3) verlaufen, sowie zumindest ein Solarmodul (4), welches zwischen zwei Tragseilen (2) angeordnet ist und zumindest eine Solaroberfläche (5) umfasst, sowie ein Verstellseil (6), durch das die Solaroberfläche (5) relativ zu den Tragseilen (2) um eine Verstellachse (7) winkelverstellbar ist, wobei das Verstellseil (6) über einen Hebel (8) mit dem Solarmodul (4) verbunden ist, wobei die Verstellachse (7), um die das Solarmodul (4) gedreht wird, senkrecht zu den Tragseilen (2)verläuft, **dadurch gekennzeichnet, dass** das Solarmodul (4) eine Stabilisierungsvorrichtung (9) umfasst, welche das Solarmodul (4) insbesondere gegen Biegung und/oder Torsion stabilisiert.

2. Photovoltaikanlage (1) nach Anspruch 1, **dadurch gekennzeichnet, dass** das Solarmodul (4) eine obere (5a) und eine untere (5b) Solaroberfläche umfasst.

3. Photovoltaikanlage (1) nach einem der vorhergehenden Ansprüche, **dadurch gekennzeichnet, dass** mehrere Solarmodule (4) nebeneinander angeordnet sind, wobei die Verstellachsen (7) parallel zueinander angeordnet sind und die Solarmodule (4) zwischen den jeweils gleichen Tragseilen (2) angeordnet sind, wobei insbesondere das Verstellseil (6) mit allen Hebeln (8) der parallel angeordneten Solarmodule (4) verbunden ist.

4. Photovoltaikanlage (1) nach einem der vorhergehenden Ansprüche, **dadurch gekennzeichnet, dass** die Tragseile fixiert angeordnet sind und insbesondere relativ zu den Stützvorrichtungen unverstellbar sind.

5. Photovoltaikanlage (1) nach einem der vorhergehenden Ansprüche, **dadurch gekennzeichnet, dass** zumindest ein mittleres Tragseil (2) ausgebildet ist, welche zwischen dem ersten und dem zweiten Tragseil (2) angeordnet ist und an welchem erste Solarmodule (4) befestigt sind, die mit dem ersten äusseren Tragseil (2) verbunden sind und zweite Solarmodule (4), die mit dem zweiten äusseren Tragseil (2) verbunden sind.

6. Photovoltaikanlage (1) nach Anspruch 5, **dadurch gekennzeichnet, dass** durch das Verstellseil (6) die ersten und die zweiten Solarmodule (4) verstellbar sind.

7. Photovoltaikanlage (1) nach einem der Ansprüche 5 oder 6, **dadurch gekennzeichnet, dass** mindestens drei mittlere Tragseile (2) ausgebildet sind, wobei weniger Verstellseile (6) als mittlere Tragseile (2) ausgebildet sind.

8. Photovoltaikanlage (1) nach einem der vorhergehenden Ansprüche, **dadurch gekennzeichnet, dass** jedes Solarmodul (4) ein mittleres Längsprofil (10) umfasst, welches einen im wesentlichen viereckigen Aussenquerschnitt aufweist, wobei der Innenquerschnitt mehr Ecken aufweist als der Aussenquerschnitt.

9. Photovoltaikanlage (1) nach einem der vorhergehenden Ansprüche, **dadurch gekennzeichnet, dass** die Stabilisierungsvorrichtung (9) auf der Unterseite des Solarmoduls (4) angeordnet ist und lichtdurchlässige Öffnungen (11) umfasst.

10. Photovoltaikanlage (1) nach einem der vorhergehenden Ansprüche, **dadurch gekennzeichnet, dass** mindestens an einem der Tragseile (2) Kraftmessvorrichtungen (12) ausgebildet sind, durch die effektive Windkräfte auf die Photovoltaikanlage (1) messbar sind.

11. Photovoltaikanlage (1) nach einem der vorhergehenden Ansprüche, **dadurch gekennzeichnet, dass** die Stützvorrichtungen (3) jeweils einen Seilsattel (13) umfassen, in dem das jeweilige Tragseil (2) eingeklemmt ist, wobei der Seilsattel (13) mit der Stützvorrichtung (3) insbesondere beweglich verbunden ist.

12. Verfahren zu Erzeugung von Solarenergie durch eine Photovoltaikanlage (1) nach einem der vorhergehenden Ansprüche, **dadurch gekennzeichnet, dass** die Solarmodule (4) beidseitig mit Solaroberflächen (5a, 5b) ausgestattet sind, so dass auch von der Geländeoberfläche reflektiertes Licht zur Energieerzeugung genutzt wird.

13. Verfahren nach Anspruch 12, **dadurch gekennzeichnet, dass** die Solarmodule (4) bei Feststellung von zu viel Wind verstellt werden, so dass die Windangriffsfläche verkleinert wird.

14. Verfahren nach Anspruch 12 oder 13, **dadurch gekennzeichnet, dass** die Solarmodule (4) bei Feststellung von zu viel Schnee und/oder Eis verstellt werden, so dass die Belastung im Wesentlichen entfernt wird.
